(19) Europäisches Patentamt
European Patent Office
Office européen des brevets

(11) **EP 4 475 268 B1**

(12) **EUROPEAN PATENT SPECIFICATION**

(45) Date of publication and mention
of the grant of the patent:
**28.01.2026 Bulletin 2026/05**

(21) Application number: **24179792.7**

(22) Date of filing: **04.06.2024**

(51) International Patent Classification (IPC):
*H01M 10/42* [(2006.01)]  *H01M 4/04* [(2006.01)]
*H01M 4/13* [(2010.01)]  *H01M 4/62* [(2006.01)]
*H01M 4/66* [(2006.01)]  *H01M 10/0525* [(2010.01)]
*H01M 10/0587* [(2010.01)]  *H01M 50/107* [(2021.01)]

(52) Cooperative Patent Classification (CPC):
**H01M 10/0587; H01M 4/0404; H01M 4/13;
H01M 4/622; H01M 4/667; H01M 10/0525;
H01M 10/4235; H01M 50/107;** Y02E 60/10;
Y02P 70/50

(54) **RECHARGEABLE LITHIUM BATTERY**

WIEDERAUFLADBARE LITHIUMBATTERIE

BATTERIE RECHARGEABLE AU LITHIUM

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **08.06.2023  KR 20230073470**

(43) Date of publication of application:
**11.12.2024 Bulletin 2024/50**

(73) Proprietor: **Samsung SDI Co., Ltd.
Yongin-si, Gyeonggi-do 17084 (KR)**

(72) Inventor: **Han, Wonchull
17084 Yongin-si, Gyeonggi-do (KR)**

(74) Representative: **Gulde & Partner
Patent- und Rechtsanwaltskanzlei mbB
Berliner Freiheit 2
10785 Berlin (DE)**

(56) References cited:
**EP-A1- 2 209 151      WO-A1-2019/187130
KR-B1- 101 768 195    US-A1- 2023 099 713**

**Description**

**BACKGROUND**

**1. Field**

Embodiments of the present disclosure described herein are related to a rechargeable lithium battery.

**2. Description of the Related Art**

A rechargeable lithium battery may be recharged and has three or more times as high energy density per unit weight as a comparable lead storage battery, nickelcadmium battery, nickel hydrogen battery, nickel zinc battery and/or the like. It may be also charged at a relatively high rate and thus, is commercially manufactured for a laptop, a cell phone, an electric tool, an electric bike, and/or the like, and researching on improving additional energy density has been actively made or pursued. For example, US 2023/0099713 A1 discloses a method for manufacturing a dry electrode. In the method, a conductive primer layer and an insulating protective layer are formed in a single step, or the insulating protective layer is formed first before an electrode active material layer is formed and after the conductive primer layer is formed. In this manner, there is no gap between the insulating protective layer and the conductive primer layer, thereby providing further improved insulation property.

One area of interest of research is related to insulation properties of rechargeable lithium batteries. In this regard, a ceramic insulating film may be applied to uncoated portions of positive and/or negative electrode plates of the rechargeable lithium battery but such is prone to brittle fracture due to its material characteristics (e.g., of the ceramic). In particular, if (e.g., when) the rechargeable lithium battery is applied to a vehicle (e.g., an electric vehicle), the ceramic insulating film may fall off more easily due to vibration and/or movement of the electric vehicle.

**SUMMARY**

Aspects according to one or more embodiments are directed toward a rechargeable lithium battery in which brittle fracture is suppressed or reduced even if (e.g., when) a ceramic insulating film is applied to an uncoated portion of a positive electrode plate.

Aspects according to one or more embodiments are directed toward a rechargeable lithium battery that improves the insulation properties of the battery by applying a ceramic insulating film to the uncoated portion of the positive electrode plate, and suppresses brittle fracture by increasing the binder content (e.g., amount) in the ceramic insulating film.

Additional aspects will be set forth in part in the description which follows and, in part, will be apparent from the description, or may be learned by practice of the presented embodiments of the present disclosure.

According to one or more embodiments, a rechargeable lithium battery may include an electrode assembly being wound around a winding axis and including a positive electrode plate having a positive electrode uncoated portion and a positive electrode coated portion; a negative electrode plate having a negative electrode uncoated portion and a negative electrode coated portion; and a separator between the positive electrode plate and the negative electrode plate, wherein a ceramic insulating film is on at least a portion of the positive electrode uncoated portion, the ceramic insulating film includes ceramic and a binder, and a binder content (e.g., amount) based on a total amount of the ceramic insulating film is greater than or equal to 60 wt%. The positive electrode uncoated portion comprises a first positive electrode uncoated portion being a positive electrode tab and a second positive electrode uncoated portion not being an electrode tab, and the ceramic insulating film is located on the second positive electrode uncoated portion. A width of the first positive electrode uncoated portion and a width of the second positive electrode uncoated portion (10b) satisfy Equation 3:

$$\text{Equation 3}$$

$$0.85 \leq W11/W12 \leq 0.90$$

wherein, in Equation 3,
W11 is a width of the first positive electrode uncoated portion (10c); and
W12 is a width of the second positive electrode uncoated portion (10b)

**BRIEF DESCRIPTION OF THE DRAWINGS**

FIG. 1 is a schematic view of an electrode assembly according to some embodiments.
FIG. 2 is a schematic view of a positive electrode plate according to some embodiments.
FIG. 3 is a schematic view of a rechargeable lithium battery according to some embodiments.

## DETAILED DESCRIPTION

Hereinafter, a rechargeable lithium battery according to some embodiments will be described in more detail with reference to the accompanying drawings. However, these embodiments are example, the present disclosure is not limited thereto and the present disclosure is defined by the scope of claims.

Unless otherwise defined, all terms (including technical and scientific terms) utilized in the present disclosure have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, are to be expected. In some embodiments, the embodiments described in the present disclosure should not be construed as limited to the particular shapes regions of illustrated in the present disclosure but may include deviations in shapes that result, for example, from manufacturing. For example, regions illustrated or described as being flat may be typically rough and/or have nonlinear features. Moreover, sharp-drawn angles may be round. In some embodiments, regions illustrated in the drawings are schematic in nature and their shapes are not intended to illustrate the actual shape of a region and are not intended to limit the scope of the claims.

The present disclosure may, however, be embodied in different forms and should not be construed as limited to the embodiments described in the present disclosure. These embodiments are provided so that the present disclosure will be thorough and complete, and will fully convey the scope of the present disclosure to those skilled in the art. Like reference numerals designate like elements.

When it is described that an element is "on" another element, it will be understood that the element may be disposed directly on another element or still another element may be interposed therebetween. On the other hand, when it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. In some embodiments, a first element, component, region, layer, or section described may be termed a second element, component, region, layer, or section without departing from the teachings of the present specification.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. "At least one" should not be construed as being limited to the singular. As utilized herein, the term "and/or" includes any and all combinations of one or more of the associated listed items. The terms "includes," "including," "comprises," and/or "comprising," when utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilize or operation in addition to the orientation illustrated in the drawings. For example, when a device in the drawings is turned over, elements described as "below" or "beneath" other elements or features would then be "above" or "over" the other elements or features. In some embodiments, the example term "below" may encompass both (e.g., simultaneously) orientations of above and below. The device may be otherwise oriented (rotated 90 degrees or at other orientations), and the spatially relative terms utilized herein may be interpreted accordingly.

As utilized herein, the term "particle size" or "particle diameter" refers to an average diameter when particles (e.g., diameter or size of crystallites, cross-section diameter or size of tubes, and/or the like) are spherical (or circular) and refers to an average major axis length when particles are non-spherical (or non-circular). A particle diameter may be measured by utilizing a particle size analyzer (PSA). A "particle size" or "particle diameter" is, for example, an average particle diameter. An "average particle diameter" refers to, for example, a median particle diameter (D50).

D50 refers to a particle size corresponding to a 50 % cumulative volume if (e.g., when) a particle size distribution measured through a laser diffraction method is calculated from particles having a smaller particle size.

D90 refers to a particle size corresponding to a 90 % cumulative volume if (e.g., when) a particle size distribution measured through a laser diffraction method is calculated from particles having a smaller particle size.

D10 refers to a particle size corresponding to an about 10 % cumulative volume if (e.g., when) a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "composite cathode active material" as utilized herein refers to a cathode material that may undergo lithiation and delithiation.

The term "anode active material" as utilized herein refers to an anode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As described previously, one of the recent development directions for rechargeable lithium batteries is related to insulation properties. In this regard, it may be considered to apply a ceramic insulating film to the uncoated portion of the electrode plate of the rechargeable lithium battery, but the ceramic insulating film is prone to brittle failure due to its material characteristics. In particular, if (e.g., when) a rechargeable lithium battery is applied to vehicle (e.g., an electric vehicle), the phenomenon of the ceramic insulating film falling off may become more severe due to vibration and movement of the electric vehicle.

The rechargeable lithium battery of one or more embodiments of the present disclosure improves the insulation properties of the battery by applying a ceramic insulating film to the uncoated portion of the electrode plate, and suppresses or reduces brittle fracture by increasing the binder content (e.g., amount) in the ceramic insulating film.

For example, some embodiments provide a rechargeable lithium battery including an electrode assembly wound around a winding axis and including

a positive electrode plate having a positive electrode uncoated portion and a positive electrode coated portion;
a negative electrode plate having a negative electrode uncoated portion and a negative electrode coated portion; and
a separator between the positive electrode plate and the negative electrode plate,
wherein a ceramic insulating film is on at least a portion of the positive electrode uncoated portion,
the ceramic insulating film includes ceramic and a binder, and
a binder content (e.g., amount) based on a total amount of the ceramic insulating film is greater than or equal to 60 wt%.

As utilized herein, "uncoated portion" refers to a portion on the current collector in which an electrode active material layer is not formed, and "coated portion" refers to a portion in which an electrode active material layer is formed on the current collector.

Hereinafter, a rechargeable lithium battery of some embodiments will be described in more detail.

## Binder Content in Ceramic Insulating Film

When the binder content (e.g., amount) in the ceramic insulating film is increased, the ionic conductivity of the ceramic insulating film may decrease, but the adhesion of the ceramic insulating film to the positive electrode uncoated portion is improved.

However, the ceramic insulating film is on at least a portion of the positive electrode uncoated portion and is solely for the purpose of "insulation properties" (e.g., insulation of electrons), and "ionic conductivity" is not a subject to be considered here.

Accordingly, it is desirable to increase the binder content (e.g., amount) in the ceramic insulating film to suppress or reduce brittle fracture and falling off of the ceramic insulating film.

For example, if (e.g., when) the binder content (e.g., amount) of the total amount of the ceramic insulating film is less than about 60 wt%, brittle fracture and falling off of the ceramic insulating film become more severe.

In contrast, if (e.g., when) the binder content (e.g., amount) in the total amount of the ceramic insulating film is greater than or equal to about 60 wt%, greater than or equal to about 70 wt%, or greater than or equal to about 80 wt%, brittle fracture and falling off of the ceramic insulating film are suppressed or reduced. The upper limit is not particularly limited, but the binder content (e.g., amount) of the total amount of the ceramic insulating film may be less than or equal to about 99 wt%, less than or equal to about 95 wt%, or less than or equal to about 90 wt%.

## Ceramic

The ceramic is not particularly limited as long as it is a material that can provide insulation properties to the ceramic insulating film, but may also be $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or any suitable combination thereof.

## Binder

The binder serves to adhere the ceramics to each other and to adhere the ceramics to the positive electrode uncoated portion. The binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or any suitable combination thereof.

## Structure of Electrode Assembly

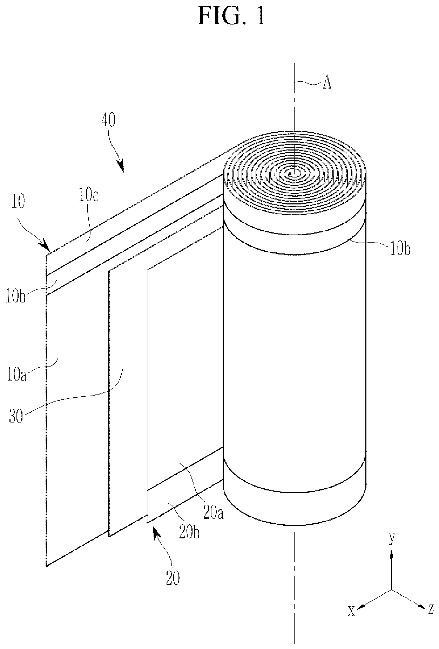

FIG. 1 is a schematic view of an electrode assembly 40 according to some embodiments.

The electrode assembly 40 is an electrode assembly wound around a winding axis A. The electrode assembly 40 includes a positive electrode plate 10 having a positive electrode uncoated portion 10b, 10c and a positive electrode coated portion 10a. The electrode assembly 40 further includes a negative electrode plate 20 having a negative electrode uncoated portion 20b and a negative electrode coated portion 20a.

The positive electrode uncoated portions 10b and 10c are located at the long side end of the positive electrode plate 10 from a winding tip (e.g., winding start) of the positive electrode plate 10 to a winding end and exposed to the outside of the separator 30; and the negative electrode uncoated portion 20b also is located at the long side end of the negative electrode plate 20 from a winding tip (e.g., winding start) of the negative electrode plate 20 to a winding end and exposed outside of the separator 30. A ceramic insulating film is disposed in a part of the positive electrode uncoated portion 10b. The ceramic insulating film includes a ceramic and a binder. A binder content based on a total amount of the ceramic insulating film is greater than or equal to 60 wt%.

The positive electrode uncoated portions 10b and 10c are exposed out of the separator 30 on top; and the negative electrode uncoated portion 20b may be exposed out of the separator 30 at the bottom.

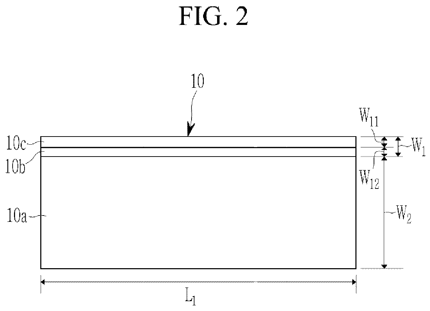

FIG. 2 is a schematic view of a positive electrode plate 10 according to some embodiments.

According to the invention, the positive electrode uncoated portion includes a first positive electrode uncoated portion 10c functioning as a positive electrode tab and a second positive electrode uncoated portion 10b not functioning as an electrode tab, and the ceramic insulating film is arranged on the second uncoated portion 10b.

Because the ceramic insulating film on the second uncoated portion 10b is wound around a winding axis (A), in order to suppress or reduce brittle fracture and falling-off of the ceramic insulating film, a binder content (e.g., amount) in the ceramic insulating film is important to increase.

The first positive electrode uncoated portion 10c may be folded after notching to function as the positive electrode. In the notching and folding of the first positive electrode uncoated portion 10c, it also is important to increase the binder content (e.g., amount) in the ceramic insulating film.

A length and a width of the positive electrode uncoated portion 10b, 10c may satisfy Equation 1:

## Equation 1

$$1.0*10^{-3} \leq W_1/L_1 \leq 2.0*10^{-3}$$

In the Equation 1, $L_1$ is a length of the positive electrode plate, $W_1$ is a width of the positive electrode uncoated portion.

For example, Equation 1 may have a lower limit of about $1.1*10^{-3}$, about $1.2*10^{-3}$, or about $1.3*10^{-3}$ and an upper limit of about $2.0*10^{-1}$, about $1.8*10^{-1}$, or about $1.7*10^{-1}$.

When Equation 1 is satisfied, the electrode assembly may be formed.

A width of the positive electrode uncoated portion and a width of the positive electrode coated portion may satisfy Equation 2:

## Equation 2

$$0.09 \leq W_1/W_2 \leq 0.13$$

In Equation 2, $W_1$ is a width of the positive electrode uncoated portion; and $W_2$ is a width of the positive electrode coated portion.

For example, Equation 2 may have a lower limit of about 0.092, about 0.094, or about 0.096 and an upper limit of about 0.128, about 0.126, or about 0.124.

When Equation 2 is satisfied, the electrode assembly may be formed.

According to the invention a width of the first positive electrode uncoated portion and a width of the second positive electrode uncoated portion satisfies Equation 3:

## Equation 3

$$0.85 \leq W_{11}/W_{12} \leq 0.90$$

In Equation 3, $W_{11}$ is the width of the first positive electrode uncoated portion; and $W_{12}$ is the width of the second positive electrode uncoated portion.

For example, Equation 3 may have a lower limit of about 0.852, about 0.854, or about 0.856 and an upper limit of about 0.898, about 0.896, or about 0.894.

When Equation 3 is satisfied, the electrode assembly may be formed.

**Case**

A rechargeable lithium battery may be classified into cylindrical type or kind, prismatic type or kind, pouch-type or kind, coin-type or kind, and/or the like depending on a case shape.

The rechargeable lithium battery of some embodiments may further include a cylindrical can housing the electrode assembly.

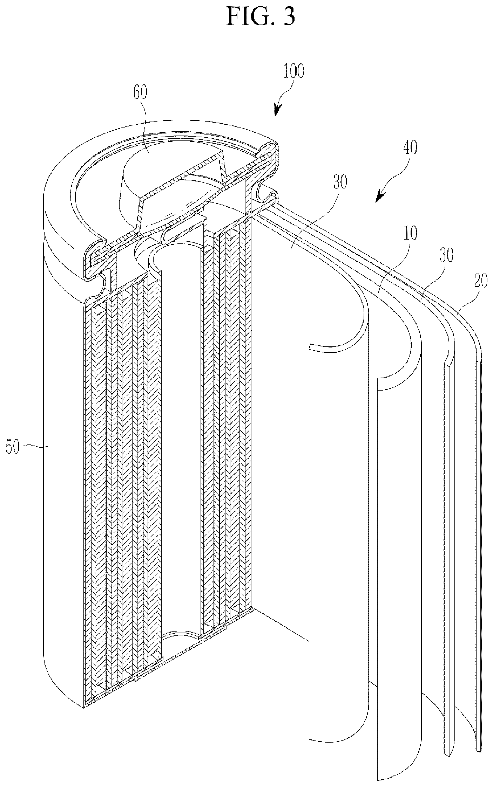

FIG. 3 is a schematic view showing the rechargeable lithium battery of some embodiments, which is a cylindrical rechargeable lithium battery. Referring to FIG. 3, the cylindrical rechargeable lithium battery 100 may include an electrode assembly 40 formed by interposing a separator 30 between a positive electrode 10 and a negative electrode 20 and a case 50 housing the electrode assembly 40. In FIG. 3, two separators 30 are shown with the positive electrode 10 interposed therebetween. The positive electrode 10, the negative electrode 20, and the separator 30 may be impregnated in an electrolyte solution. The rechargeable lithium battery 100, as shown in FIG. 1, may further include a sealing member 60 sealing the case 50.

In particular, if (e.g., when) the rechargeable lithium battery is applied to an electric vehicle, falling-off of the ceramic insulating film may be worsen by vibration and movement of the electric vehicle. However, the rechargeable lithium battery of some embodiments, even if applied to the electric vehicle, may be suppressed or reduced from the brittle fracture due to a high binder content (e.g., amount) in the ceramic insulating film.

The cylindrical can for the electric vehicle may have volume of about 145 cm$^3$ to about 146 cm$^3$ but as a total height of the cell is increased, the cylindrical can may have a volume of about 145 cm$^3$ to about 183 cm$^3$.

## Positive Electrode Active Material

The positive electrode active material may be a compound (lithiated intercalation compound) capable of intercalating and deintercalating lithium. For example, one or more types (kinds) of composite oxides of lithium and a metal of (e.g., selected from among) cobalt, manganese, nickel, and/or any suitable combination thereof may be utilized.

The composite oxide may be a lithium transition metal composite oxide, and specific examples may include lithium nickel-based oxide, lithium cobalt-based oxide, lithium manganese-based oxide, a lithium iron phosphate-based compound, cobalt-free lithium nickel-manganese-based oxide, and/or any suitable combination thereof.

As an example, the positive electrode active material may be a high nickel-based positive electrode active material having a nickel content (e.g., amount) of greater than or equal to about 80 mol% based on about 100 mol% of metals excluding lithium in the lithium transition metal composite oxide. The nickel content (e.g., amount) in the high nickel-based positive electrode active material may be greater than or equal to about 85 mol%, greater than or equal to about 90 mol%, greater than or equal to about 91 mol%, or greater than or equal to about 94 mol%, and less than or equal to about 99 mol% based on about 100 mol% of metals excluding lithium. The high nickel-based positive electrode active materials can achieve high capacity and can be applied to a high-capacity, high-density rechargeable lithium battery.

In some embodiments, a compound represented by any of the following chemical formulas may be utilized. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}O_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); $Li_aFePO_4$ ($0.90 \leq a \leq 1.8$)

In the above chemical formulas, A is Ni, Co, Mn, and/or any suitable combination thereof; X is Al, Ni, Co, Mn, Cr, Fe, Mg, Sr, V, a rare earth element, and/or any suitable combination thereof; D is O, F, S, P, and/or any suitable combination thereof; G is Al, Cr, Mn, Fe, Mg, La, Ce, Sr, V, and/or any suitable combination thereof; Q is Ti, Mo, Mn, and/or any suitable combination thereof; Z is Cr, V, Fe, Sc, Y, and/or any suitable combination thereof; and $L^1$ is Mn, Al, and/or any suitable combination thereof.

For example, the positive electrode active material may include cobalt-free lithium nickel manganese-based oxide.

As utilized herein, the cobalt-free lithium nickel manganese-based oxide as a positive electrode active material refers to a positive electrode active material composed of nickel, manganese, and/or the like as main components without cobalt in the composition of the positive electrode active material.

As an example, the cobalt-free lithium nickel manganese-based oxide may include at least one type or kind of lithium composite oxide represented by Chemical Formula 2.

**Chemical Formula 2** $\quad\quad Li_aNi_xMn_yM^1_zM^2_wO_{2\pm b}X_c$

In Chemical Formula 2,

$0.5 \leq a < 1.8$, $0 \leq b \leq 0.1$, $0 \leq c \leq 0.1$, $0 \leq w < 0.1$, $0.6 \leq x < 1.0$, $0 < y < 0.4$, $0 < z < 0.1$, $w + x + y + z = 1$, $M^1$ and $M^2$ may each independently be one or more elements of (e.g., selected from among) Al, Mg, Ti, Zr, Cr, Sr, V, B, W, Mo, Nb, Si, Ba, Ca, Ce, Cr, Fe and/or Nb, and X is one or more elements of (e.g., selected from among) S, F, P, and/or Cl.

As an example, Chemical Formula 2 may be represented by Chemical Formula 2-1.

**Chemical Formula 2-1** $\quad\quad Li_aNi_{x1}Mn_{y1}Al_{z1}M^2_{w1}O_{2\pm b}X_c$

In Chemical Formula 2-1,

$0.5 \leq a < 1.8$, $0 \leq b \leq 0.1$, $0 \leq c \leq 0.1$, $0 \leq w1 < 0.1$, $0.6 \leq x1 < 1.0$, $0 < y1 < 0.4$, $0 < z1 < 0.1$, $w1 + x1 + y1 + z1 = 1$, $M^2$ is each independently one or more elements of (e.g., selected from among) Mg, Ti, Zr, Cr, Sr, V, B, W, Mo, Nb, Si, Ba, Ca, Ce, Cr, Fe, and/or Nb, and X is one or more elements of (e.g., selected from among) F, P, and/or Cl.

In Chemical Formula 2-1, $0.6 \leq x1 \leq 0.9$, $0.1 \leq y1 \leq 0.4$, and $0 \leq z1 \leq 0.1$, or $0.6 \leq x1 \leq 0.8$, $0.2 \leq y1 \leq 0.4$, and $0 \leq z1 \leq 0.1$.

For example, in Chemical Formula 2-1, x1 may be $0.6 \leq x1 \leq 0.79$, y1 may be $0.2 \leq y1 \leq 0.39$, and z1 may be $0.01 \leq z1 < 0.1$.

## Positive Electrode

The positive electrode for a rechargeable lithium battery may include a current collector and a positive electrode active material layer on the current collector. The positive electrode active material layer may include a positive electrode active material and may further include a binder and/or a conductive material.

A content (e.g., amount) of the positive electrode active material may be about 90 wt% to about 99.5 wt%.

In some embodiments, the positive electrode active material layer may further include a binder and a conductive material. Herein, a content (e.g., amount) of the binder and the conductive material may be about 0.5 wt% to about 5 wt%, respectively based on about 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or any suitable combination thereof, but are not limited thereto.

The conductive material may be utilized to impart conductivity (e.g., electrical conductivity) to the electrode. Any material that does not cause chemical change (e.g., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and carbon nanotube; a metal-based material including copper, nickel, aluminum, silver, and/or the like, a metal powder or a metal fiber (e.g., in a form of a metal powder or a metal fiber); a conductive polymer such as a polyphenylene derivative; or a mixture thereof.

Al may be utilized as the current collector, but the present disclosure is not limited thereto.

## Negative Electrode Active Material

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon and/or any suitable combination thereof. The crystalline carbon may be graphite such as irregular-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include lithium and a metal of (e.g., selected from among) Na, K, Rb, Cs, Fr, Be, Mg, Ca, Sr, Si, Sb, Pb, In, Zn, Ba, Ra, Ge, Al, and/or Sn.

The material capable of doping/dedoping lithium may be a Si-based negative electrode active material or a Sn-based negative electrode active material. The Si-based negative electrode active material may include silicon, a silicon-carbon composite, $SiO_x$ (0 < x < 2), a Si-Q alloy (wherein Q is of (e.g., selected from among) an alkali metal, an alkaline-earth metal, a Group 13 element, a Group 14 element (excluding Si), a Group 15 element, a Group 16 element, a transition metal, a rare earth element, and/or any suitable combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or any suitable combination thereof). The Sn-based negative electrode active material may include Sn, $SnO_2$, a Sn alloy, and/or any suitable combination thereof.

The silicon-carbon composite may be a composite of silicon and amorphous carbon. An average particle diameter ($D_{50}$) of the silicon-carbon composite particle may be for example about 0.5 micrometers ($\mu$m) to about 20 $\mu$m. According to some embodiments, the silicon-carbon composite may include silicon particles and amorphous carbon coated on the surface of the silicon particles (e.g., be in a form of silicon particles and amorphous carbon coated on the surface of the silicon particles). For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core. The crystalline carbon may be artificial graphite, natural graphite, and/or any suitable combination thereof. The amorphous carbon may include soft carbon or hard carbon, a mesophase pitch carbonized product, and calcined coke.

When the silicon-carbon composite includes silicon and amorphous carbon, a content (e.g., amount) of silicon may be about 10 wt% to about 50 wt%, and a content (e.g., amount) of amorphous carbon may be about 50 wt% to about 90 wt% based on about 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, and a content (e.g., amount) of crystalline carbon may be about 10 wt% to about 70 wt%, and a content (e.g., amount) of amorphous carbon may be about 20 wt% to about 40 wt% based on about 100 wt% of the silicon-carbon composite.

Additionally, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may exist as silicon alone, a silicon alloy (e.g., in the form of a silicon alloy), or oxidized (e.g., in an oxidized form). The oxidized form of silicon may be represented by $SiO_x$ (0<x<2). In some embodiments, an atomic content (e.g., amount) ratio of Si:O, which indicates a degree of oxidation, may be about 99:1 to about 33:67. As utilized herein, if (e.g., when) a definition is not otherwise provided, an average particle diameter ($D_{50}$) indicates a particle where an accumulated volume is about 50 volume% in a particle distribution.

The Si-based negative electrode active material or the Sn-based negative electrode active material may be utilized in combination with a carbon-based negative electrode active material. If utilizing a mixture of Si-based negative electrode active material or Sn-based negative electrode active material and carbon-based negative electrode active material, a mixing ratio may be about 1:99 to about 90:10 by weight.

**Negative Electrode**

The negative electrode for a rechargeable lithium battery includes a current collector and a negative electrode active material layer on the current collector. The negative electrode active material layer includes a negative electrode active material and may further include a binder and/or a conductive material.

A content (e.g., amount) of the negative electrode active material may be about 95 wt% to about 99.5 wt% based on about 100 wt% of the negative electrode active material layer. A content (e.g., amount) of the binder may be about 0.5 wt% to about 5 wt% based on about 100 wt% of the negative electrode active material layer. A content (e.g., amount) of the binder may be about 0.5 wt% to about 5 wt% based on about 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, and/or any suitable combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or any suitable combination thereof.

The aqueous binder may be of (e.g., selected from among) a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or any suitable combination thereof.

When an aqueous binder is utilized as the negative electrode binder, it may further include a cellulose-based compound capable of imparting viscosity. The cellulose-based compound includes one or more of carboxymethylcellulose, hydroxypropylmethyl cellulose, methyl cellulose, or alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or any suitable combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of a metal powder or a metal fiber; a conductive polymer such as a polyphenylene derivative; or a mixture thereof.

The negative electrode current collector may include one of (e.g., selected from among) a copper foil, a nickel foil, a stainless steel foil, a titanium foil, a nickel foam, a copper foam, a polymer substrate coated with a conductive metal, and/or any suitable combination thereof, but the present disclosure is not limited thereto.

**Separator**

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, and/or any suitable combination thereof on a surface or side (e.g., one or both surfaces (e.g., opposite surfaces)) of the porous substrate.

The porous substrate may be a polymer film formed of any one of (e.g., selected from among) a polymer, and/or a copolymer and/or mixture of two or more of polyolefin such as polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenylene oxide, a cyclic olefin copolymer, polyphenylene sulfide, polyethylene naphthalate, a glass fiber, TEFLON (tetrafluoroethylene), and/or polytetrafluoroethylene.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of (e.g., selected from among) $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or any suitable combination thereof, but the present disclosure is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

**Non-aqueous Organic Solvent**

The non-aqueous organic solvent serves as a medium for transmitting ions taking part in the electrochemical reaction of a battery.

The non-aqueous organic solvent may be a carbonate-based, ester-based, ether-based, ketone-based, alcohol-based solvent, aprotic solvent, and/or any suitable combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. Additionally, ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and/or the like.

The non-aqueous organic solvent may be utilized alone or as a mixture of two or more, and if (e.g., when) utilized in combination with two or more, a mixing ratio may be appropriately adjusted according to the desired or suitable battery performance, which is well understood by those skilled in the art.

In one or more embodiments, if (e.g., when) utilizing a carbonate-based solvent, it is desirable to utilize only chain carbonate, excluding cyclic carbonate (free), but a mixture of cyclic carbonate and chain carbonate may be utilized, and in the latter case, cyclic carbonate and chain carbonate may be mixed at a volume ratio of about 1:1 to about 1:9. For example, the non-aqueous organic solvent may include ethylene carbonate (EC), ethylmethyl carbonate (EMC), dimethyl carbonate (DMC), and/or any suitable combination thereof.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

**Lithium Salt**

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more than one of (e.g., selected from among) $LiPF_6$, $LiBF_4$, $LiSbF_6$, $LiAsF_6$, $LiClO_4$, $LiAlO_2$, $LiAlCl_4$, $LiPO_2F_2$, $LiCl$, $Lil$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (x and y are integers from 1 to 20), lithium trifluoromethane sulfonate, lithium tetrafluoroethanesulfonate, lithium difluorobis(oxalato)phosphate, (LiDFOB), and/or lithium bis(oxalato)borate (LiBOB).

A concentration of lithium salt may be within the range of about 0.1 M to about 2.0 M. When the concentration of lithium salt is within the above range, the electrolyte has appropriate or suitable ionic conductivity and viscosity, and thus excellent or suitable performance can be achieved and lithium ions can move effectively.

Hereinafter, examples of the present disclosure and comparative examples are described. These examples, however, are not in any sense to be interpreted as limiting the scope of the present disclosure.

**Examples and Comparative Examples**

**Example 1**

**1 Manufacturing of Positive Electrode Plate**

An aluminum foil with a length $(L_1)$ * a width $(W_1+W_2)$ * a thickness = about 4688 mm * about 72.5 mm * about 0.01 mm was prepared, and as shown in FIG. 2, a positive electrode was divided into a first uncoated portion, a second uncoated portion, and a coated portion.

For example, from a long end of the aluminum foil, the aluminum foil was divided into a positive electrode uncoated portion with a width $(W_1)$ of about 7.5 mm and a positive electrode coated portion with a width $(W_2)$ of about 65 mm. The positive electrode uncoated portion was divided again into the first positive electrode uncoated portion 10c with a width $(W_{11})$ of about 3.5 mm and the second positive electrode uncoated portion 10b with a width $(W_{12})$ of about 4.0 mm from the long end of the aluminum foil.

A positive electrode active material of $LiNi_{0.75}Mn_{0.23}Al_{0.02}O_2$, a binder of polyvinylidene fluoride, and a conductive material of acetylene black were mixed in a weight ratio of about 96:3:1 and then, dispersed in an N-methyl pyrrolidone to prepare positive electrode active material slurry. Subsequently, the positive electrode active material slurry was coated on the positive electrode coated portion.

Also, ceramic insulating film slurry was prepared by mixing ceramic of alumina $(Al_2O_3)$ and a binder of polyvinylidene fluoride in a weight ratio of 40:60 and dispersing the mixture in N-methyl pyrrolidone. Subsequently, the ceramic insulating film slurry was coated on the second positive electrode uncoated portion.

Then, drying at about 100 °C and pressing were performed to manufacture a positive electrode.

**2 Manufacture of Negative Electrode**

A copper foil with a length * a width * a thickness = about 4790 mm * about 73.5 mm * about 0.01 mm was prepared and then, divided into a negative electrode uncoated portion and a negative electrode coated portion.

For example, from a long end of the copper foil, the copper foil was divided into the negative electrode uncoated portion with a width of about 5.5 mm and the negative electrode coated portion with a width of about 68 mm.

After preparing a negative electrode active material by mixing artificial graphite and an Si-C composite in a weight ratio of about 93:7, the negative electrode active material was mixed with a styrene-butadiene rubber binder and carboxymethylcellulose in a weight ratio of about 98:1:1 and then, dispersed in distilled water to prepare negative electrode active material slurry.

Herein, the Si-C composite had a core including artificial graphite and silicon particles and coal pitch coated on the surface of the core.

The negative electrode active material slurry was coated on the negative electrode coated portion and then, dried at about 100 °C and pressed to manufacture a negative electrode.

**3 Manufacturing of Electrode Assembly and Rechargeable Lithium Battery Cell**

As shown in FIG. 1, an about 10 μm-thick polyethylene separator was arranged between the positive electrode and the negative electrode to be assembled together. For example, an electrode assembly was manufactured by winding the positive electrode and the negative electrode with the separator therebetween, while exposing the positive electrode uncoated portions 10b and 10c above the separator 30, while exposing the negative electrode uncoated portion 20b below the separator 30.

The electrode assembly was housed into a cylindrical can with a volume of about 146 cm$^3$, and an electrolyte solution was implanted thereinto to manufacture a rechargeable lithium battery cell. Herein, the electrolyte solution was prepared by mixing ethylene carbonate (EC) and dimethyl carbonate (DMC) in a volume ratio of about 3:7 and dissolving about 1 M LiPF$_6$ in the non-aqueous organic solvent.

**Example 2**

An electrode assembly and a rechargeable lithium battery cell were manufactured in substantially the same manner as in Example 1 except that alumina (Al$_2$O$_3$) as a ceramic and polyvinylidene fluoride as a binder were mixed in a weight ratio of about 30:70.

**Example 3**

An electrode assembly and a rechargeable lithium battery cell were manufactured in substantially the same manner as in Example 1 except that alumina (Al$_2$O$_3$) as a ceramic and polyvinylidene fluoride as a binder were mixed in a weight ratio of about 20:80.

**Example 4**

An electrode assembly and a rechargeable lithium battery cell were manufactured in substantially the same manner as in Example 1 except that alumina (Al$_2$O$_3$) as a ceramic and polyvinylidene fluoride as a binder were mixed in a weight ratio of about 10:90.

**Comparative Example 1**

An electrode assembly and a rechargeable lithium battery cell were manufactured in substantially the same manner as in Example 1 except that alumina (Al$_2$O$_3$) as a ceramic and polyvinylidene fluoride as a binder were mixed in a weight ratio of about 70:30.

**Comparative Example 2**

An electrode assembly and a rechargeable lithium battery cell were manufactured in substantially the same manner as in Example 1 except that alumina (Al$_2$O$_3$) as a ceramic and polyvinylidene fluoride as a binder were mixed in a weight ratio of about 50:50.

**Evaluation Examples**

**Evaluation Example 1: Peel Test**

A peel test was performed by separating the insulation layer from each of the positive electrode plates of Examples 1 to 4 and Comparative Examples 1 and 2 to test adhesion between the positive electrode uncoated portion and the insulation layer.

**Evaluation Example 2: Drop Test**

A drop test was performed by freely dropping each of the rechargeable lithium battery cells of Examples 1 to 4 and Comparative Examples 1 and 2 from a height of about 1.8 m onto a steel plate on the ground.

As a falling test result, a voltage change according to heating or not due to internal short circuits and damage on the connection between positive and negative terminals outside of a cell and current collector portions inside the cell was expressed as NG%.

Table 1

|  | Peel test (gf/mm) | Drop test (NG %) |
| --- | --- | --- |
| Comparative Example 1 | 1-2 | 5 |
| Comparative Example 2 | 3 | 3 |

(continued)

|  | Peel test (gf/mm) | Drop test (NG %) |
|---|---|---|
| Example 1 | not measurable | 0 |
| Example 2 | not measurable | 0 |
| Example 4 | not measurable | 0 |
| Example 1 | not measurable | 0 |

Referring to Table 1, Examples 1 to 4 exhibited so (such) excellent or suitable adhesion between the positive electrode plate and the separator that are beyond the scale of the test results (e.g., as having not measurable peel test results). As such, in these examples even if (e.g., when) the rechargeable lithium battery cells were dropped, brittle fracture of the positive electrode plate in each was suppressed.

The rechargeable lithium battery cells of some embodiments, which had a relatively high binder content (e.g., amount) in the ceramic insulating film, were suppressed or reduced from the brittle fracture, even though applied to electric vehicles.

In the present disclosure, when particles are spherical, "diameter" indicates a particle diameter or an average particle diameter, and when the particles are non-spherical, the "diameter" indicates a major axis length or an average major axis length.

**Reference Numerals**

100 rechargeable lithium battery
10 positive electrode plate
10a coated portion of the positive electrode plate
10b, 10c uncoated portions of the positive electrode plate
20 negative electrode plate
20a coated portion of the negative electrode plate
20b uncoated portion of the negative electrode plate
30 separator
40 electrode assembly
50 case
60 sealing member
70 electrode tab

**Claims**

1. A rechargeable lithium battery (100) comprising:

   an electrode assembly (40) wound around a winding axis (A) and comprising:

   a positive electrode plate (10) having a positive electrode uncoated portion (10b, 10c) and a positive electrode coated portion (10a);

   a negative electrode plate (20) having a negative electrode uncoated portion (20b) and a negative electrode coated portion (20a); and
   a separator (30) between the positive electrode plate (10) and the negative electrode plate (12),
   wherein a ceramic insulating film is on at least a portion of the positive electrode uncoated portion (10b, 10c),
   the ceramic insulating film comprises ceramic and a binder, and
   a binder content based on a total amount of the ceramic insulating film is greater than or equal to 60 wt%,
   the positive electrode uncoated portion comprises a first positive electrode uncoated portion (10c) being a positive electrode tab and a second positive electrode uncoated portion (10b) not being an electrode tab, and
   the ceramic insulating film is located on the second positive electrode uncoated portion (10b), **characterized in that**

a width of the first positive electrode uncoated portion (10c) and a width of the second positive electrode uncoated portion (10b) satisfy Equation 3:

## Equation 3

$$0.85 \leq W_{11}/W_{12} \leq 0.90$$

wherein, in Equation 3,
$W_{11}$ is a width of the first positive electrode uncoated portion (10c); and
$W_{12}$ is a width of the second positive electrode uncoated portion (10b).

2. The rechargeable lithium battery (100) as claimed in claim 1, wherein
the binder content based on a total amount of the ceramic insulating film is greater than or equal to 80 wt%.

3. The rechargeable lithium battery (100) as claimed in claim 1 or claim 2, wherein
the ceramic is at least one selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, and boehmite.

4. The rechargeable lithium battery (100) as claimed in any one of the preceding claims, wherein
the binder is at least one selected from among polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon.

5. The rechargeable lithium battery (100) as claimed in any one of the preceding claims, wherein
the positive electrode uncoated portion (10b, 10c) is at a long side end from a winding tip to a winding end of the positive electrode plate (10).

6. The rechargeable lithium battery (100) as claimed in claim 5, wherein
the positive electrode uncoated portion (10b, 10c) is exposed to the top of the separator (30).

7. The rechargeable lithium battery (100) as claimed in claim 5, wherein

a length and a width of the positive electrode uncoated portion (10b, 10c) satisfy Equation 1:

## Equation 1

$$1.0*10^{-3} \leq W_1/L_1 \leq 2.0*10^{-3}$$

wherein, in Equation 1,
$L_1$ is a length of the positive electrode plate (10), and
$W_1$ is a width of the positive electrode uncoated portion (10b, 10c).

8. The rechargeable lithium battery (100) as claimed in claim 7, wherein

a width of the positive electrode uncoated portion (10b, 10c) and a width of the positive electrode coated portion (10a) satisfy Equation 2:

## Equation 2

$$0.09 \leq W_1/W_2 \leq 0.13$$

wherein, in Equation 2,
$W_1$ is a width of the positive electrode uncoated portion (10b, 10c), and
$W_2$ is a width of the positive electrode coated portion (10a).

9. The rechargeable lithium battery (100) as claimed in any one of the preceding claims, further comprising: a cylindrical can accommodating the electrode assembly (40).

10. The rechargeable lithium battery (100) as claimed in claim 9, wherein
a volume of the cylindrical can is 145 cm$^3$ to 183 cm$^3$.

**Patentansprüche**

1. Wiederaufladbare Lithiumbatterie (100), umfassend:

eine Elektrodenbaugruppe (40), die um eine Wickelachse (A) gewickelt ist und Folgendes umfasst: eine positive Elektrodenplatte (10) mit einem unbeschichteten positiven Elektrodenabschnitt (10b, 10c) und einem beschichteten positiven Elektrodenabschnitt (10a);
eine negative Elektrodenplatte (20) mit einem unbeschichteten negativen Elektrodenabschnitt (20b) und einem beschichteten negativen Elektrodenabschnitt (20a); und
einen Separator (30) zwischen der positiven Elektrodenplatte (10) und der negativen Elektrodenplatte (12),
wobei sich ein keramischer Isolierfilm auf mindestens einem Abschnitt des unbeschichteten positiven Elektrodenabschnitts (10b, 10c) befindet,
wobei der keramische Isolierfilm Keramik und ein Bindemittel umfasst und
der Bindemittelgehalt, bezogen auf die Gesamtmenge des keramischen Isolierfilms, größer oder gleich 60 Gew.-% ist,
der unbeschichtete positive Elektrodenabschnitt einen ersten unbeschichteten positiven Elektrodenabschnitt (10c), der eine positive Elektrodenlasche ist, und einen zweiten unbeschichteten positiven Elektrodenabschnitt (10b), der keine Elektrodenlasche ist, umfasst, und
sich der keramische Isolierfilm auf dem zweiten unbeschichteten positiven Elektrodenabschnitt (10b) befindet,
**dadurch gekennzeichnet, dass**
eine Breite des ersten unbeschichteten positiven Elektrodenabschnitts (10c) und eine Breite des zweiten unbeschichteten positiven Elektrodenabschnitts (10b) die Gleichung 3 erfüllen:

## Gleichung 3

$$0,85 \leq W_{11}/W_{12} \leq 0,90$$

wobei in Gleichung 3
$W_{11}$ eine Breite des ersten unbeschichteten positiven Elektrodenabschnitts (10c) ist; und
$W_{12}$ eine Breite des zweiten unbeschichteten positiven Elektrodenabschnitts (10b) ist.

2. Wiederaufladbare Lithiumbatterie (100) nach Anspruch 1, wobei
der Bindemittelgehalt, bezogen auf die Gesamtmenge des keramischen Isolierfilms, größer oder gleich 80 Gew.-% ist.

3. Wiederaufladbare Lithiumbatterie (100) nach Anspruch 1 oder Anspruch 2, wobei
die Keramik mindestens eines von $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$ und Böhmit ist.

4. Wiederaufladbare Lithiumbatterie (100) nach einem der vorstehenden Ansprüche, wobei
das Bindemittel mindestens eines von Polyvinylalkohol, Carboxymethylcellulose, Hydroxypropylcellulose, Diacetylcellulose, Polyvinylchlorid, carboxyliertem Polyvinylchlorid, Polyvinylfluorid, einem ethylenoxidhaltigen Polymer, Polyvinylpyrrolidon, Polyurethan, Polytetrafluorethylen, Polyvinylidenfluorid, Polyethylen, Polypropylen, einem Styrol-Butadien-Kautschuk, einem (meth)acrylierten Styrol-Butadien-Kautschuk, einem Epoxidharz, einem (Meth)acrylharz, einem Polyesterharz und Nylon ist.

5. Wiederaufladbare Lithiumbatterie (100) nach einem der vorstehenden Ansprüche, wobei
sich der unbeschichtete positive Elektrodenabschnitt (10b, 10c) an einem Längsende von einer Wickelspitze zu einem Wickelende der positiven Elektrodenplatte (10) befindet.

6. Wiederaufladbare Lithiumbatterie (100) nach Anspruch 5, wobei

der unbeschichtete positive Elektrodenabschnitt (10b, 10c) an der Oberseite des Separators (30) freiliegt.

7. Wiederaufladbare Lithiumbatterie (100) nach Anspruch 5, wobei

eine Länge und eine Breite des unbeschichteten positiven Elektrodenabschnitts (10b, 10c) die Gleichung 1 erfüllen:

## Gleichung 1

$$1,0*10^{-3} \leq W_1/L_1 \leq 2,0*10^{-3}$$

wobei in Gleichung 1
$L_1$ eine Länge der positiven Elektrodenplatte (10) und
$W_1$ eine Breite des unbeschichteten positiven Elektrodenabschnitts (10b, 10c) ist.

8. Wiederaufladbare Lithiumbatterie (100) nach Anspruch 7, wobei

eine Breite des unbeschichteten positiven Elektrodenabschnitts (10b, 10c) und eine Breite des beschichteten positiven Elektrodenabschnitts (10a) die Gleichung 2 erfüllen:

## Gleichung 2

$$0,09 \leq W_1/W_2 \leq 0,13$$

wobei in Gleichung 2
$W_1$ eine Breite des unbeschichteten positiven Elektrodenabschnitts (10b, 10c) und
$W_2$ eine Breite des beschichteten positiven Elektrodenabschnitts (10a) ist.

9. Wiederaufladbare Lithiumbatterie (100) nach einem der vorstehenden Ansprüche, umfassend ferner: einen zylindrischen Behälter, der die Elektrodenbaugruppe (40) aufnimmt.

10. Wiederaufladbare Lithiumbatterie (100) nach Anspruch 9, wobei
das Volumen des zylindrischen Behälters 145 cm$^3$ bis 183 cm$^3$ beträgt.


**Revendications**

1. Batterie rechargeable au lithium (100) comportant :
un ensemble électrode (40) enroulé autour d'un axe d'enroulement (A) et comportant :

une plaque d'électrode positive (10) ayant une partie non revêtue d'électrode positive (10b, 10c) et une partie revêtue d'électrode positive (10a) ;
une plaque d'électrode négative (20) ayant une partie non revêtue d'électrode négative (20b) et une partie revêtue d'électrode négative (20a) ; et
un séparateur (30) entre la plaque d'électrode positive (10) et la plaque d'électrode négative (12) ;
dans laquelle un film isolant céramique se trouve sur au moins une partie de la partie non revêtue d'électrode positive (10b, 10c),
le film isolant céramique comporte une céramique et un liant, et
une teneur en liant par rapport à une quantité totale du film isolant céramique est supérieure ou égale à 60 % en poids,
la partie non revêtue d'électrode positive comporte une première partie non revêtue d'électrode positive (10c) qui est une languette d'électrode positive et une deuxième partie non revêtue d'électrode positive (10b) qui n'est pas une languette d'électrode, et
le film isolant céramique est situé sur la deuxième partie non revêtue d'électrode positive (10b), **caractérisée en ce que**
une largeur de la première partie non revêtue d'électrode positive (10c) et une largeur de la deuxième partie non revêtue d'électrode positive (10b) satisfont à l'équation 3 :

**Équation 3 :**

$$0,85 \leq W_{11}/W_{12} \leq 0,90$$

dans laquelle, dans l'équation 3,
$W_{11}$ est une largeur de la première partie non revêtue d'électrode positive (10c) ; et
$W_{12}$ est une largeur de la deuxième partie non revêtue d'électrode positive (10b).

2. Batterie rechargeable au lithium (100) selon la revendication 1, dans laquelle la teneur en liant par rapport à une quantité totale du film isolant céramique est supérieure ou égale à 80 % en poids.

3. Batterie rechargeable au lithium (100) selon la revendication 1 ou la revendication 2, dans laquelle la céramique est au moins l'un sélectionné parmi $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$ et la boémite.

4. Batterie rechargeable au lithium (100) selon l'une quelconque des revendications précédentes, dans laquelle le liant est au moins l'un sélectionné parmi l'alcool polyvinylique, la carboxyméthylcellulose, l'hydroxypropylcellulose, la diacétylcellulose, le polychlorure de vinyle, le polychlorure de vinyle carboxylé, le polyfluorure de vinyle, un polymère contenant de l'oxyde d'éthylène, le polyvinylpyrrolidone, le polyuréthane, le polytétrafluoroéthylène, le fluorure de polyvinylidène, le polyéthylène, le polypropylène, un caoutchouc styrène-butadiène, un caoutchouc styrène-butadiène (méth)acrylé, une résine époxy, une résine (méth)acrylique, une résine polyester et le nylon.

5. Batterie rechargeable au lithium (100) selon l'une quelconque des revendications précédentes, dans laquelle la partie non revêtue d'électrode positive (10b, 10c) se trouve à une extrémité latérale longue d'un bord d'enroulement à une extrémité d'enroulement de la plaque d'électrode positive (10).

6. Batterie rechargeable au lithium (100) selon la revendication 5, dans laquelle la partie non revêtue d'électrode positive (10b, 10c) est exposée au sommet du séparateur (30).

7. Batterie rechargeable au lithium (100) selon la revendication 5, dans laquelle

une longueur et une largeur de la partie non revêtue d'électrode positive (10b, 10c) satisfont à l'équation 1 :

**Équation 1**

$$1,0*10^{-3} \leq W_1/L_1 \leq 2,0*10^{-3}$$

dans laquelle, dans l'équation 1,
$L_1$ est une longueur de la plaque d'électrode positive (10), et
$W_1$ est une largeur de la partie non revêtue d'électrode positive (10b, 10c).

8. Batterie rechargeable au lithium (100) selon la revendication 7, dans laquelle

une largeur de la partie non revêtue d'électrode positive (10b, 10c) et une largeur de la partie revêtue d'électrode positive (10a) satisfont à l'équation 2 :

**Équation 2**

$$0,09 \leq W_1/W_2 \leq 0,13$$

dans laquelle, dans l'équation 2,
$W_1$ est une largeur de la partie non revêtue d'électrode positive (10b, 10c), et
$W_2$ est une largeur de la partie revêtue d'électrode positive (10a).

9. Batterie rechargeable au lithium (100) selon l'une quelconque des revendications précédentes, comportant en outre :
un boîtier cylindrique logeant l'ensemble électrode (40).

10. Batterie rechargeable au lithium (100) selon la revendication 9, dans laquelle un volume du boîtier cylindrique est de

145 cm$^3$ à 183 cm$^3$.

# FIG. 1

# FIG. 2

# FIG. 3

**EP 4 475 268 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230099713 A1